**Europäisches Patentamt**

**European Patent Office**

**Office européen des brevets**

(19)

(11) Veröffentlichungsnummer: **0 110 004**
**B1**

(12) # EUROPÄISCHE PATENTSCHRIFT

(45) Veröffentlichungstag der Patentschrift:
12.08.87

(21) Anmeldenummer: **83104705.5**

(22) Anmeldetag: **13.05.83**

(51) Int. Cl.⁴: **F 16 K  1/52,** G 01 M  3/00,
F 16 K  7/16

(54) **Testleck.**

(30) Priorität: **26.11.82  DE 3243752**
**26.11.82  DE 8233183 U**

(43) Veröffentlichungstag der Anmeldung:
**13.06.84 Patentblatt 84/24**

(45) Bekanntmachung des Hinweises auf die Patenterteilung:
**12.08.87 Patentblatt 87/33**

(84) Benannte Vertragsstaaten:
**DE FR GB**

(56) Entgegenhaltungen:
**DE-A-2 702 002**
**FR-A-1 073 923**
**GB-A-153 392**
**US-A-2 856 148**
**US-A-3 733 048**
**US-A-4 129 284**

(73) Patentinhaber: **Leybold- Heraeus GmbH, Bonner**
**Strasse 504 Postfach 51 07 60, D-5000 Köln 51 (DE)**

(72) Erfinder: **Gerdau, Ludolf, Dipl.- Ing.,**
**Pestalozzistrasse 3, D-5013 Elsdorf (DE)**
Erfinder: **Grosse Bley, Werner, Dipl.- Phys.,**
**Ahrweg 3, D-5305 Alfter 4 (DE)**
Erfinder: **Widt, Rudi, Dipl.- Ing., Türnicher Strasse**
**3, D-5000 Köln 51 (DE)**

(74) Vertreter: **Leineweber, Jürgen, Dipl.- Phys., Am**
**Heidstamm 78 a, D-5000 Köln 40 (DE)**

LIBER, STOCKHOLM 1987

## Beschreibung

Die Erfindung bezieht sich auf eine Vorrichtung zur Abgabe eines Testgases mit vorgegebener Leckrate zum Testen eines Lecksuchgerätes mit einer die Leckrate bestimmenden, innerhalb eines zylindrischen Körpers gelegenen Kapillaren, bei welcher der zylindrische Körper derart in einem Gehäuse angeordnet ist, daß zwei nur über die Kapillare miteinander verbundene Räume gebildet sind, von denen der eine mit einer Testgasquelle in Verbindung steht und der andere mit dem zu testenden Lecksuchgerät verbindbar ist, und bei welcher die Kapillare in die ausströmseitige, eben gestaltete Stirnfläche des zylindrischen Körpers mündet.

Vorrichtungen dieser Art - auch Testlecks genannt - werden bei der Kontrolle und beim Abgleich von Lecksuchgeräten eingesetzt. Sie stellen praktisch ein Leck mit einer bekannten Leckrate dar. Eine generelle Forderung an Testlecks ist deshalb, daß sie über möglichst lange Zeiten stabile Testgasströme liefern. Die Leckrate wird entweder bestimmt durch eine Wandung, durch die Testgas mit bekannter Rate hindurchdiffundiert. Eine andere Möglichkeit besteht darin, das Testgas durch eine die Leckrate bestimmende Kapillare bei konstanter Druckdifferenz vor und hinter der Kapillare hindurchströmen zu lassen. Als Testgas kommen reines Helium, ein Helium-Luft-Gemisch mit bekanntem Helium-Anteil oder auch ein anderes Testgas (z. B. Argon) infrage.

Aus der DE-A- 2 702 002 ist eine Vorrichtung der eingangs genannten Art bekannt. Der zylindrische Körper mit der als Kapillare ausgebildeten Engstelle führt von dem mit dem Testgasvorrat verbundenen Raum ins Freie. Ein Absperrventil ist nicht vorgesehen, so daß bei relativ großen Leckraten der Nachteil des relativ schnellen Aufbrauchs des Testgases und der ständigen Anreicherung der Umgebungsluft mit Testgas besteht. Der zuletzt genannte Nachteil kan zu Fehlmessungen führen.

Bei einem weiteren Testleck ist ein Absperrventil vorgesehen, das relativ weit von der die Leckrate bestimmenden Engstelle entfernt angeordnet ist, so daß zwischen der Engstelle und der Verschlußöffnung des Absperrventils ein sogenanntes Totvolumen besteht, in dem sich bei geschlossenem Absperrventil Testgas anreichert. Darüber hinaus diffundiert das Testgas in die Dichtungswerkstoffe des Absperrventils ein. Diese Vorgänge führen dazu, daß nach dem Öffnen des Absperrventils zwecks Abgleichs eines Lecksuchers zunächst ein "Testgasschluck" registriert wird, der so groß sein kann, daß die Gefahr einer Verseuchung und/oder Übersteuerung von Registriergeräten, zum Beispiel des testgasempfindlichen Detektors, besteht. Weiterhin führt das bei geöffnetem Absperrventil aus den Dichtungswerkstoffen hinausdiffundierende Testgas für längere Zeit zu einer Verfälschung des "wahren", vom Testleck abgegebenen Testgasstroms.

Aus der US-A- 2 856 148 ist eine Ventilanordnung mit einer eine kleine Durchflußmenge bestimmenden Engstelle bekannt. Die Anwendung dieser Ventilanordnung bei einer Vorrichtung zur Abgabe eines Testgases würde jedoch nicht zu einer Verbesserung des Schluckverhaltens führen. Die vorbekannte Ventilanordnung ist mit einem als Kante ausgebildeten Ventilsitz ausgerüstet, dem eine mit einer Kugel betätigbare Metallmembrane zugeordnet ist. Würde die vorbekannte Ventilanordnung als Ventil bei Testlecks eingesetzt, und zwar mit der offenbarten Durchströmrichtung, dann ergäbe sich beim Abschalten das unerwünschte Schluckverhalten, da der trichterförmige Raum oberhalb der Engstelle immer noch ein nicht vernachlässigbares Totvolumen darstellt. Würde die vorbekannte Ventilanordnung mit entgegengesetzter Durchströmrichtung bei Testlecks eingesetzt, dann ergäbe sich das unerwünschte Schluckverhalten beim Einschalten.

Um die beschriebenen Nachteile bezüglich des Schluckverhaltens zu beseitigen, ist bereits vorgeschlagen worden, das Totvolumen über ein zweites Ventil ständig zu evakuieren. Dieser Aufwand ist relativ hoch und muß zum Beispiel bei großen Lecks ( > 10⁻⁶ mbar 1/sec) getrieben werden. Bei kleineren Lecks wird der Öffnungsschluck in Kauf genommen.

Nachteilig an den vorbekannten Lösungen ist der bei Leckraten > 10⁻⁶ mbar 1/sec relativ hohe Testgasverbrauch mit seinen dadurch bedingten Folgen. Bei Testlecks ohne Absperreinrichtung tritt wegen des ständigen Gasverbrauchs relativ früh eine Druckveränderung ein, so daß sich die Leckrate des Testlecks ändert und deshalb ein solches Testleck nicht mehr zu Kalibrierzwecken verwendet werden kann.

Der vorliegenden Erfindung liegt die Aufgabe zugrunde, eine Vorrichtung zur Abgabe eines Testgases der eingangs genannten Art derart mit einem Absperrventil auszurüsten, daß das unerwünschte Schluckverhalten nicht mehr auftritt.

Erfindungsgemäß wird diese Aufgabe dadurch gelöst, daß die Vorrichtung mit einem Absperrventil mit Ventilsitz und Verschlußstück ausgerüstet ist, welches auf der Ausströmseite der Kapillaren angeordnet ist, daß die ebene Stirnfläche des zylindrischen Körpers den Ventilsitz bildet und daß das Verschlußstück scheibenförmig ausgebildet ist, aus einem Elastomer (Gummi, Kunststoff oder dergleichen) besteht und in der Absperrstellung flächig am Ventilsitz anliegt.

Eine Vorrichtung nach der Erfindung weist praktisch einen Direktverschluß des Lecks selbst auf, da die Verschlußöffnung des Absperrventils und die Engstelle des Testlecks praktisch zusammenfallen, ein Totraum also nicht mehr vorhanden ist. Das erfindungsgemäß gestaltete Testleck hat deshalb weder ein "Schluck"-Verhalten noch benötigt es eine Leckraten-Stabilisierungszeit. Infolge der großflächigen Anlage der beiden Dichtpartner in der Schließstellung des Ventils ist eine sichere Abdichtung gewährleistet, was insbesondere bei der Verwendung von Helium als Testgas von besonderem Vorteil ist. Unmittelbar nach dem Öffnen des Absperrventils strömt das Testgas stabil mit der gewünschten Leckrate aus, so daß das erfindungsgemäße Testleck insbesondere für Automatisierungszwecke geeignet ist. Ein Totvolumen mit der Folge erheblicher Testgasverluste vor jedem Kalibriervorgang ist nicht mehr vorhanden.

Weitere Vorteile und Einzelheiten der Erfindung sollen anhand von in den Figuren 1 bis 5 dargestellen Ausführungsbeispielen erläutert werden.

Es zeigen:

Figuren 1 und 2 schematisch einige Lösungen für Testlecks mit Direktverschluß,

Figuren 3 und 4 ein Ausführungsbeispiel für ein Testleck mit einer Lösung nach Fig. 1.

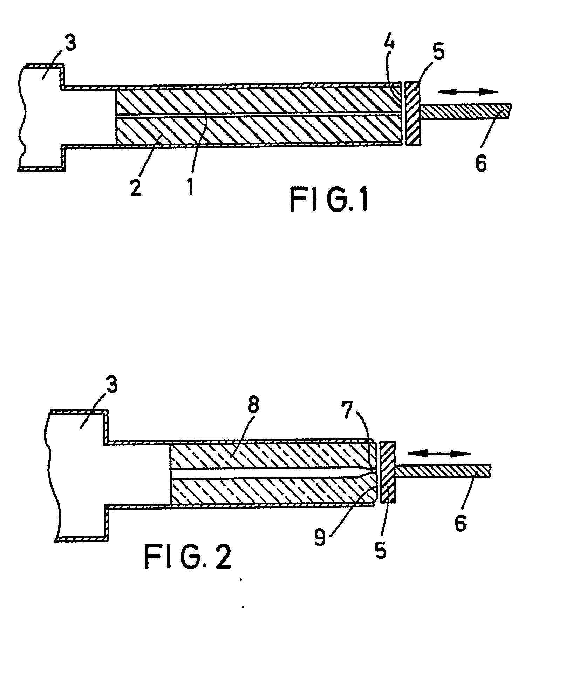

Bei der Lösung nach Fig. 1 ist die die Leckrate bestimmende Engstelle eine Kapillare 1, welche einen zylindrischen Körper 2, z. B. aus Epoxidharz, zentral durchsetzt. Mit 3 ist ein Testgas-Vorratsbehälter bezeichnet, auf den der zylindrische Körper 2 derart aufgesetzt ist, daß Testgas in die Kapillare 1 einströmt. Die freie Stirnfläche 4, in die das andere Ende der Kapillare 1 mündet, bildet den Ventilsitz einer Absperreinrichtung, die noch das Verschlußstück 5 und den Stempel 6 umfaßt. Die Stirnfläche 4 ist zur Erzielung eines dichten Verschlusses der Kapillare 1 flächig angeschliffen, so daß sie als Ventilsitz für ein scheibenförmiges Verschlußstück 5, bestehend aus Gummi oder Kunststoff, geeignet ist.

Beim Gegenstand nach Fig. 2 ist die die Leckrate bestimmende Engstelle eine Kapillaröffnung 7, hergestellt durch ein Beinahe-Zuschmelzen eines dickwandigen Glasrohres 8. Die Kapillaröffnung 7 liegt in der Stirnfläche 9, welche wieder den Ventilsitz einer Absperreinrichtung bildet, die zusätzlich noch - wie beim Gegenstand nach Fig. 1-das scheibenförmige Verschlußstück 5 und den Stempel 6 umfaßt.

Bei den Lösungen nach Figuren 1 und 2 ist ein Totvolumen nicht mehr vorhanden, da die die Leckrate bestimmende Engstelle 1 bzw. 7 praktisch mit der Verschlußöffnung der Absperreinrichtung zusammenfällt. Die Gefahr, daß in das flexible Verschlußstück eindiffundierendes Testgas nach dem Öffnen der Absperrvorrichtung den austretenden Testgasstrom beeinflußt, ist wegen der sehr kleinen Verschlußöffnung praktisch nicht mehr vorhanden.

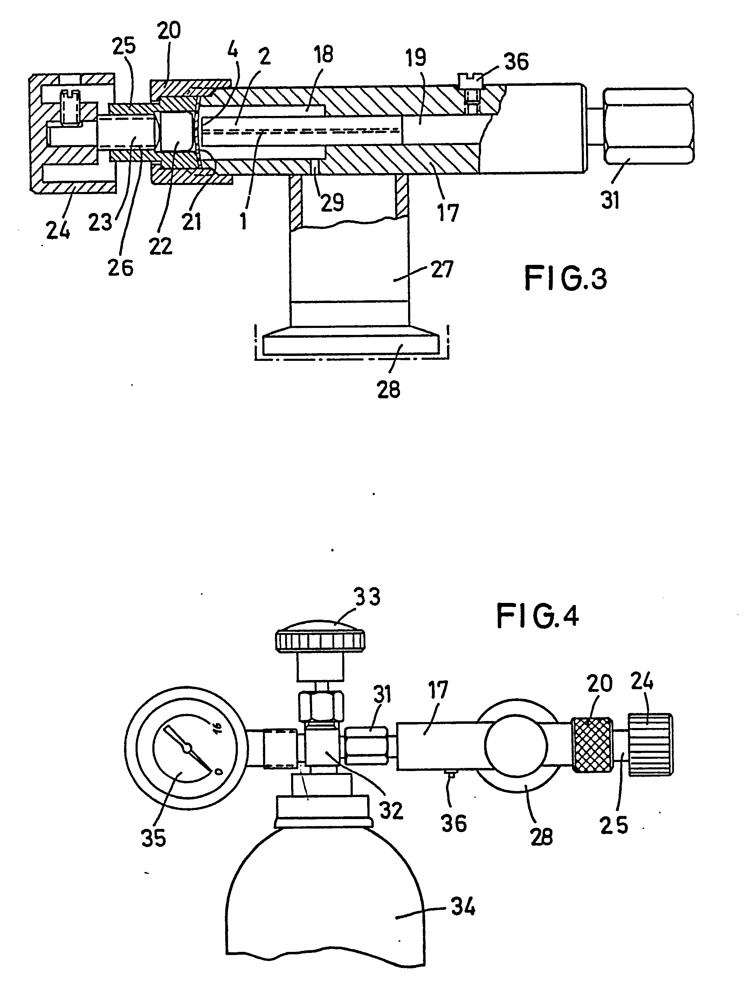

Fig. 3 zeigt einen Testleckkörper mit einer prinzipiell der Lösung nach Fig. 1 entsprechenden Absperrvorrichtung.

Das Testleck besteht aus dem rohrförmigen Gehäuse 17, in dem der Kunststoffzylinder 2 mit der Kapillaren 1 derart angeordnet ist, daß sich zwei getrennte, nur durch die Kapillare 1 miteinander verbundene Räume 18 und 19 innerhalb des Gehäuses 17 befinden. Raumabschnitt 18 ist im wesentlichen ein den Kunststoffzylinder 2 umgebender Ringraum.

Das Absperrventil wird von der Stirnfläche 4 (Ventilsitz) des Kunststoffzylinders 2 im Raum 18 und einem Verschlußstück gebildet, welches in diesem Falle aus der Membran 21 besteht. Diese Membran 21 steht unter der Wirkung eines Druckstückes 22, das seinerseits mit Hilfe der Spindel 23 und dem Handrad 24 axial verschiebbar ist. Zur Aufnahme des Druckstückes 22 und der Spindel 23 dient eine Hülse 25, die im Bereich der Spindel 23 mit einem Gewinde 26 ausgerüstet ist. Das Druckstück 22 ist in der Hülse 25 derart verschiebbar gelagert, daß Drehbewegungen der Spindel 23 nicht auf die Membran 21 übertragen werden. Mit Hilfe einer Überwurfmutter 20 ist der antrieb (Teile 22, 23, 24) auf das Gehäuse 17 aufgeschraubt. Die Größe der Membran 21 ist so gewählt, daß sie den Innenraum 18 des Gehäuses 17 dicht vom Antrieb der Absperreinrichtung trennt. Mittels der Hülse 25 wird sie auf das stirnseitige Ende des Gehäuses 17 gedrückt.

Über den Anschlußstutzen 27 mit dem Flansch 28 ist die dargestellte Vorrichtung an einen zu kalibrierenden Lecksucher anschließbar. Der Ringraum 18 ist mit dem Anschlußstutzen über die Bohrung 29 verbunden. Bei offenem Absperrventil 4, 21 strömt durch die Kapillare 1 ein Testgasstrom mit fester Leckrate aus der in der Stirnfläche 4 gelegenen Kapillarmündung aus und gelangt durch die Bohrung 29 und über den Anschlußstutzen 27 in die zu kalibrierende Einrichtung.

Die Art und Weise, wie das Testgas dem Raum 19 im Gehäuse 17 zugeführt wird, ist in Fig. 3 nicht dargestellt.

Die Zuführung erfolgt - wie aus Figur 4 ersichtlich - über den Anschluß 31, der in den Raum 19 im Gehäuse 17 führt. An den Anschluß 31 ist ein Absperrventil 32 (mit Handrad 33) angeschlossen. Mit 34 ist eine Helium-Gasflasche bezeichnet, die über die Absperreinrichtung 32 mit dem Innenraum 19 im Gehäuse 17 verbindbar ist und Testgas liefert.

Mit 36 ist eine Entlüftungs- bzw. Druckeinstellschraube bezeichnet. Diese erlaubt es, den Innenraum 19 im Gehäuse 17 zu entlüften mit dem Ziel, nach dem Anschluß einer neuen Testgasflasche reines Testgas von der Leckeintrittsöffnung zu erzeugen. Außerdem kann mit dem Absperrventil 32 und der Schraube 36 zusammen der Arbeitsdruck vor dem Leck beliebig eingestellt werden. Ein Manometer 35 ist unabhängig von der Stellung des Absperrventils 32 dauernd mit dem Raum 19 verbunden, so daß an ihm der Arbeitsdruck und damit die eingestellte Leckrate ablesbar sind.

Durch Lösen der Überwurfmutter 20 kann das gesamte Absperrventil an der Lecköffnung entfernt werden, so daß die Leckaustrittsöffnung freiliegt. An dieser freiliegenden Lecköffnung kann ein Schnüffellecksucher in der Weise kalibriert werden, daß die Schnüffelspitze in definiertem Abstand und mit definierter Geschwindigkeit vorbeigeführt wird.

**Patentansprüche**

1. Vorrichtung zur Abgabe eines Testgases mit vorgegebener Leckrate zum Testen eines Lecksuchgerätes mit einer die Leckrate bestimmenden, innerhalb eines zylindrischen Körpers (2, 8) gelegenen Kapillaren (1, 7), bei welcher der zylindrische Körper derart in einem Gehäuse (17) angeordnet ist, daß zwei nur über die Kapillare miteinander verbundene Räume (18, 19) gebildet sind, von denen der eine (19) mit einer Testgasquelle (34) in Verbindung steht und der andere (18) mit dem zu testenden Lecksuchgerät verbindbar ist, und bei welcher die Kapillare (1, 7) in die ausströmseitige, eben gestaltete Stirnfläche (4, 9) des zylindrischen Körpers (2, 8) mündet,
dadurch gekennzeichnet, daß die Vorrichtung mit einem Absperrventil mit Ventilsitz und Verschlußstück ausgerüstet ist, welches auf der Ausströmseite (Raum 18) der Kapillaren (1, 7) angeordnet ist, daß die ebene Stirnfläche (4, 9) des zylindrischen Körpers (2, 8) den Ventilsitz bildet und daß das Verschlußstück (5, 21) scheibenförmig ausgebildet ist, aus einem Elastomer (Gummi, Kunststoff oder dergleichen) besteht und in der Asperrstellung flächig am Ventilsitz anliegt.

2. Testleck nach Anspruch 1, dadurch gekennzeichnet, daß das Verschlußstück von einer Membran (21) gebildet wird.

3. Testleck nach Anspruch 2, dadurch gekennzeichnet, daß der Membran ein drehfestes Druckstück (22) zugeordnet ist, welches innerhalb einer Hülse (25) mittels einer Spindel (23) axial verschiebbar ist.

4. Testleck nach Anspruch 3, dadurch gekennzeichnet, daß das aus Hülse (25), Membran (21), Druckstück (22) und Spindel (23) bestehende System lösbar mit einem Gehäuse (17), in dem sich die Kapillare befindet, verbunden ist.

5. Testleck nach einem der vorhergehenden Ansprüche, dadurch gekennzeichnet, daß der Raum (19) mit einem Manometer (35) und über ein Absperrventil (32) mit einem Testgasvorratsbehälter (34) verbunden ist.

6. Testleck nach einem der vorhergehenden Ansprüche, dadurch gekennzeichnet, daß dem Raum (19) eine Entlüftungs- bzw. Druckeinstellschraube (36) zugeordnet ist.

**Claims**

1. A device for releasing a test gas at a predetermined leakage rate for testing a leak detector, comprising a leakage rate determining capillary (1, 7) placed inside a cylindrical body (2, 8), the cylindrical body being so arranged in a housing (17) that two chambers (18, 19) connected together merely by the capillary are formed, one of which (19) is connected with a test gas source (34) and the other of which (18) may be connected with the leak detector to be tested, and the capillary (1, 7) opening into the flat, outflowside end face (4, 9) of the cylindrical body (2, 8), characterized in that the device is provided with a stop valve with a valve seat and closure piece, which valve is arranged on the outflow side (chamber 18) of the capillary (1, 7), in that the flat end face (4, 9) of the cylindrical body (2, 8) forms the valve seat and in that the closure piece (5, 21) is constructed in the form of a disk from an elastomer (rubber, plastics or the like) and in the shut-off position lies flat against the valve seat.

2. A test leaker according to claim 1, characterized in that the closure piece consists of a diaphragm (21).

3. A test leaker according to claim 2, characterized in that the diaphragm is provided with a rotation-resistant pressure piece (22), which is axially displaceable inside a sleeve (25) by means of spindle (23).

4. A test leaker according to claim 3, characterized in that the system consisting of the sleeve (25), diaphragm (21), pressure piece (22) and spindle (23) is connected releasably with a housing (17), in which the capillary is located.

5. A test leaker according to any one of preceding claims, characterized in that the chamber (19) is connected with a manometer (35) and via a stop valve (32) to a test gas storage vessel (34).

8. A test leaker according to any one of the preceding claims, characterized in that the chamber (19) is provided with a venting or pressure adjusting screw (36).

**Revendications**

1. Dispositif pour délivrer un gaz d'étalonnage à un débit de fuite prescrit pour étalonner un appareil de recherche de fuite, comportant un capillaire (1, 7) qui détermine le débit de fuite et qui est placé à l'intérieur d'un corps cylindrique (2, 8), dispositif dans le cas duquel le corps cylindrique est disposé dans un carter (17) de façon telle qu'il ne se forme que deux espaces (18, 19) qui sont réunis par l'intermédiaire du capillaire et dont l'un (19) est réuni à une source de gaz d'étalonnage (34) et dont l'autre peut être réuni à l'appareil de recherche de fuite à étalonner; et dispositif dans le cas duquel le capillaire (1, 7) débouche dans la surface frontale (4, 9), côté sortie, de forme plane, du corps cylindrique (2, 8),

caractérisé en ce que le dispositif est équipé d'un robinet d'arrêt, avec siège de soupape et obturateur, qui est disposé du côté sortie (espace 18) du capillaire (1, 7); en ce que la surface frontale plane (4, 9) du corps cyllindrique (2, 8) forme le siège de soupape; et en ce que l'obturateur (5, 21) e la forme d'un disque, est constitué d'un élastomère (caoutchouc, plastique ou analogue) et, en position de fermeture, s'appuie à plat contre le siège de soupape.

2. Fuite d'étalonnage selon la revendication 1, caractérisée en ce que l'obturateur est formé d'une membrane (21).

3. Fuite d'étalonnage selon la revendication 2, caractérisée en ce qu'à la membrane correspond un poussoir (22) qui ne tourne pas et qui peut coulisser axialement à l'intérieur d'une douille (25) au moyen d'une broche (23).

4. Fuite d'étalonnage selon la revendication 3, ceractérisée en ce que le système constitué d'une douille (25), d'une membrane (21), d'un poussoir (22) et d'une broche (23) est réuni, de façon amovible, dans un carter (17) dans lequel se trouve le capillaire.

5. Fuite d'étalonnage selon l'une des revendications précédentes, carectérisée en ce que l'espace (19) eat relié à un menomètre (35) et, par l'intermédiaire d'un robinet d'arrêt (32), à un réservoir de gaz d'étalonnage (34).

6. Fuite d'étalonnage selon l'une des revendications précédentes, caractérisée en ce qu'à l'espace (19) correspond une vis (36) de purge et de réglage de la pression.

FIG.1

FIG. 2

FIG.3

FIG.4